# FASCICULE DE BREVET EUROPEEN

(11) **EP 0 261 014 B1**
(45) Date de publication et mention de la délivrance du brevet: **14.05.1997**
(21) Numéro de dépôt: 87401974.8
(22) Date de dépôt: 03.09.1987
(51) Int. Cl.: C08J 3/16, C08F 14/06, C08L 27/06

(54) **Procédé de préparation d'homo- et co-polymères du chlorure de vinyle aptes à donner des plastisols**
Verfahren zur Herstellung von Plastisole ergebenden Homo- oder Copolymeren des Vinylchlorids
Method for the preparation of homo- or copolymers of vinyl chloride capable of yielding plastisols

(30) Priorité: 12.09.1986 FR 8612781
(43) Date de publication de la demande: 23.03.1988
(73) Titulaire: ELF ATOCHEM S.A., 92800 Puteaux (FR)
(72) Inventeur: Brulet, Daniel, F-69360 Saint-Symphorien d'Ozon (FR); Pommier, Yves, F-13500 Martigues (FR)
(74) Mandataire: Rochet, Michel

(56) Documents cités:
- US-A- 4 229 249
- CHEMICAL ABSTRACTS, vol 101, no. 16, 15 octobre 1984, page 31, résumé no. 131551g, Columbus, Ohio, US; W.A. ROBERSON et al.: "Influence of spray drying conditions on particle agglomeration of PVC latexes", & POLYM. PROCESS ENG. 1984, 2(1), 1-26

## Description

La présente invention a pour objet un procédé de préparation d'homo- et co-polymères du chlorure de vinyle sous forme de poudre apte à donner des plastisols de propriétés rhéologiques améliorées. Elle a également pour objet les homo- et co-polymères du chlorure de vinyle en résultant.

On sait que pour certaines applications dans lesquelles les polymères du chlorure de vinyle sont mis en oeuvre sous forme de plastisols telles que, par exemple, l'enduction, on recherche des polymères se présentant sous forme de poudre apte à la préparation de plastisols qui, à taux de plastifiant très faibles pouvant descendre jusqu'à 25 parties en poids de plastifiant pour 100 parties en poids de polymère, présentent la viscosité la plus faible possible, aussi bien sous faible gradient de vitesse que sous gradient de vitesse élevé.

Les homo- et co-polymères du chlorure de vinyle aptes à donner des plastisols sont préparés par homopolymérisation du chlorure de vinyle en émulsion ou en microsuspension ou copolymérisation du chlorure de vinyle en émulsion ou en microsuspension avec un autre monomère copolymérisable. Cette homo- ou co-polymérisation fournit industriellement un latex contenant généralement de 30 à 60 % en poids de matière sèche formée de particules d'homo- ou co-polymère du chlorure de vinyle présentant un diamètre généralement compris entre 0,1 et 5 µm. Pour obtenir le polymère à l'état pulvérulent sec on traite ledit latex, éventuellement après concentration, par exemple par ultrafiltration, généralement par séchage et notamment par séchage par atomisation.

Le séchage desdits latex par atomisation est une technique bien connue mise en oeuvre dans un appareil comprenant un dispositif d'atomisation alimenté en latex et une chambre d'atomisation dans laquelle ledit dispositif disperse en continu le latex en fines gouttelettes. Dans ce dispositif, des gaz chauds, généralement de l'air, sont mis au contact de la masse pulvérisée et permettent l'évaporation de l'eau contenue dans chaque gouttelette. La température des gaz à l'entrée de la chambre d'atomisation est généralement comprise entre 170 et 260°C et leur température à la sortie entre 65 et 80°C. A partir des particules du latex des agglomérats de polymère de diamètre généralement compris entre 30 et 150 µm sont ainsi formés en continu, séparés des gaz chauds, puis éventuellement soumis, également en continu, à un broyage destiné à les amener à des dimensions comprises généralement entre 5 et 30 µm. Le broyage peut être réalisé notamment à l'aide d'un dispositif employant l'énergie mécanique ou l'air comprimé pour précipiter les agglomérats contre une paroi solide et/ou entre eux et ainsi en réduire les dimensions.

Selon les procédés utilisés jusqu'alors, pour des raisons notamment d'homogénéité du polymère à préparer, les latex d'homo- et co-polymères du chlorure de vinyle provenant d'opérations de polymérisation successives sont mélangés dans une cuve de stockage où ils demeurent à température ambiante et c'est à température ambiante qu'ils sont mis en oeuvre pour être soumis au traitement de séchage par atomisation.

Le document "Influence of spray drying conditions on particles agglomeration of PVC latexes". Polym. Process Eng. 1984, 2(1) , 1-26, s'interesse aux relations entre les conditions de séchage des latex de PVC et la taille des particules.

Dans ce document on étudie l'influence de la température de séchage desdits latex sur la distribution de la taille des particules obtenues.

Selon le procédé de l'invention on réalise une opération de séchage par atomisation sur un latex d'homo- ou co-polymère du chlorure de vinyle.

Selon le procédé de l'invention on opère de manière que la température de mise en oeuvre du latex à soumettre à l'opération de séchage par atomisation soit au moins égale à 40°C et inférieure à la température de début de dégradation du polymère.

L'opération de séchage par atomisation est habituellement suivie d'une opération de broyage des agglomérats ainsi formés.

La demanderesse a en effet trouvé qu'en mettant en oeuvre un latex d'homo- ou co-polymère du chlorure de vinyle à température suffisamment élevée pour réaliser l'opération de séchage par atomisation, on obtient, après atomisation et éventuellement broyage, un polymère pulvérulent apte à la préparation de plastisols de propriétés rhéologiques meilleures que celui préparé, toutes choses égales par ailleurs, à partir du polymère obtenu par traitement du même latex mis en oeuvre à température ambiante. En outre, ce faisant, on obtient un polymère dont le taux de chlorure de vinyle monomère résiduel est très fortement diminué.

La mise en température du latex peut être réalisée, de manière continue ou discontinue, par tout moyen approprié et notamment par chauffage à l'aide de vapeur d'eau à basse pression (généralement entre 5 et 20 bars) mise en contact direct avec le latex ou, par chauffage, par l'intermédiaire d'un échangeur de chaleur, à l'aide d'un fluide de circulation, tel que l'eau, par exemple.

Selon une variante particulièrement avantageuse du procédé de l'invention la mise en température du latex est réalisée par chauffage par micro-ondes.

Selon une autre variante particulièrement avantageuse du procédé de l'invention la mise en température du latex est réalisée par chauffage par passage de courant électrique, de préférence alternatif, dans le latex.

Par polymères du chlorure de vinyle on entend les homo- et co-polymères, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, propionate, benzoate de vinyle ; les acides insaturés mono- et poly- carboxyliques, tels que acrylique, méthacrylique, maléique, fumarique, itaconique, ainsi que leurs esters aliphatiques, cycloaliphatiques, aromatiques, leurs amides, leurs nitriles ; les halogénures d'allyle, de vinyle, de vinylidène ; les alkylvinyléthers ; les oléfines.

Le latex à traiter peut être préparé par tout procédé d'homopolymérisation ou de copolymérisation du chlorure de vinyle en émulsion ou en microsuspension, éventuellement en présence d'un ou plusieurs produits d'ensemencement. Il peut être préparé notamment par homo- ou co-polymérisation du chlorure de vinyle en émulsion ensemencée selon le procédé décrit dans le brevet français n° 2286152. Il peut être préparé notamment par homo- ou co-polymérisation du chlorure de vinyle en microsuspension ensemencée selon le procédé décrit dans le brevet français n° 2309569. Il peut également être préparé par mélange de plusieurs latex préparés par tout procédé d'homopolymérisation ou de copolymérisation du chlorure de vinyle en émulsion ou en microsuspension. Le latex à traiter ou, dans le cas d'un mélange de latex, chacun des latex constitutifs du mélange, peut subir avant traitement une opération de concentration, par exemple par ultrafiltration. Le latex à traiter contient généralement de 40 à 80 % en poids de matière sèche formée de particules d'homo- ou co-polymère du chlorure de vinyle présentant un diamètre généralement compris entre 0,1 et 5 µm.

Dans le cas où le latex à traiter est issu de polymérisation à température au moins égale à 40°C, l'opération de séchage par atomisation peut, si on le désire, être réalisée directement sur ledit latex, avant que sa température s'abaisse au-dessous de 40°C.

Les polymères du chlorure de vinyle objet de l'invention sont applicables à la fabrication de feuilles, films, corps creux, matériaux cellulaires, articles moulés par les techniques de calandrage, extrusion, extrusion-soufflage, injection, ainsi qu'à la confection de revêtements enduits et articles moulés par toutes techniques de mise en oeuvre des plastisols et des organosols telles qu'enduction, moulage par rotation, trempage, projection.

On donne ci-après, à titre indicatif et non limitatif, des exemples de réalisation de l'invention.

Les exemples 1 et 13 sont donnés à titre comparatif.

Les exemples 2 à 12 et 14 à 24 sont selon l'invention. Ils montrent que les polymères du chlorure de vinyle provenant du traitement par séchage par atomisation d'un latex mis en oeuvre à température conforme à l'invention présentent un taux de chlorure de vinyle monomère résiduel très inférieur à celui des polymères provenant du traitement par séchage par atomisation du même latex mis en oeuvre à température non conforme à l'invention. Ils montrent également que les polymères du chlorure de vinyle provenant du traitement par séchage par atomisation d'un latex mis en oeuvre à température conforme à l'invention conduisent à des plastisols de viscosité à bas gradient de vitesse inférieure et de viscosité à haut gradient de vitesse inférieure ou au plus égale à celle des plastisols obtenus, toutes choses égales par ailleurs, à partir des polymères provenant du traitement par séchage par atomisation du même latex mis en oeuvre à température non conforme à l'invention.

L'opération de séchage des latex par atomisation est réalisée dans un appareil, connu industriellement sous l'appellation de NIRO, comportant un dispositif d'atomisation à turbine de 150 mm de diamètre, tournant à 18000 tr/min, placé à la partie supérieure d'une chambre d'atomisation de 45 m³ de capacité alimentée par de l'air chaud. La température de l'air à l'entrée de la chambre d'atomisation est de 180°C et sa température à la sortie de 70°C. Le débit des latex, exprimé en matière sèche, est de 100 kg/h.

Les agglomérats de polymère formés lors de l'opération de séchage par atomisation sont soumis à une opération de broyage dans un broyeur connu industriellement sous l'appellation de MIKROPUL ACM 10, muni d'un plateau de broyage à broches tournant à 4800 tr/min et d'un sélecteur à air comportant 24 pales de 60 mm de hauteur tournant à 3000 tr/min. Le débit de l'air est de 26 kg/min et le débit de polymère de 350 kg/h.

Après broyage un plastisol est préparé en mélangeant 100 parties en poids de polymère et 40 parties en poids de dioctylphtalate. Les propriétés rhéologiques du plastisol sont déterminées :
- d'une part à l'aide d'un rhéomètre rotationnel type Brookfield RVT (conditionnement et mesure à 25°C ; aiguille n° 7 tournant à 20 tr/min),
- d'autre part à l'aide d'un rhéomètre à extrusion type Severs (conditionnement 2 h à 25°C et mesure à 25°C).

### Exemples 1 à 12

### Préparation du latex

Dans un autoclave de 1000 litres de capacité muni d'une double enveloppe à circulation de fluide on prépare un latex d'homopolymère du chlorure de vinyle selon le procédé décrit dans le brevet français n° 2309569. Pour cela, après mise sous vide, on introduit dans l'autoclave :
- 255 kg d'eau désionisée,
- 400 kg de chlorure de vinyle,
- 65 kg d'un latex d'ensemencement de chlorure de polyvinyle à 31,5 % de teneur pondérale en matière sèche, préalablement préparé en microsuspension, dont les particules ont un diamètre moyen de 0,507 µm et contenant 1,92 %, en poids par rapport au polymère, de peroxyde de lauroyle,
- 23 kg d'un latex d'ensemencement de chlorure de polyvinyle à 43,5 % de teneur pondérale en matière sèche, préalablement préparé en émulsion, dont les particules ont un diamètre moyen de 0,130 µm et ne contenant pas de peroxyde de lauroyle,
- 2,8 kg de dodécylbenzènesulfonate de sodium,
- 15 g de sulfate de cuivre de formule SO₄Cu, 5H₂0.

On chauffe sous agitation le mélange réactionnel à 52°C sous pression autogène et maintient cette température pendant la durée de l'opération de polymérisation. Dès que la température atteint 52°C, on commence une introduction continue d'une solution aqueuse d'acide ascorbique à 0,57 g/l, à raison de 2 l/h, et la poursuit jusqu'à la fin de l'opération de polymérisation. Après 13,5 heures de polymérisation et dégazage du chlorure de vinyle qui n'a pas réagi on obtient un latex à deux populations de particules de taille différente dont la teneur pondérale en matière sèche est de 52 %. La population de grosses particules et la population de fines particules ont des diamètres moyens respectifs de 1,10 µm et de 0,20 µm et représentent respectivement 82 % et 18 % en poids.

On transfère en partie le latex dans une cuve de stockage où sa température s'abaisse à 25°C.

### Exemples 13 à 24

### Préparation du latex

Dans un autoclave de 1000 litres de capacité muni d'une double enveloppe à circulation de fluide on prépare un latex d'homopolymère du chlorure de vinyle selon le procédé décrit dans le brevet français n° 2286152. Pour cela, après mise sous vide, on introduit dans l'autoclave :
- 310 kg d'eau désionisée,
- 400 kg de chlorure de vinyle,
- 133 g de soude,
- 400 g d'acide laurique,
- 28 kg d'un latex d'ensemencement de chlorure de polyvinyle à 40 % de teneur pondérale en matière sèche, préalablement préparé en émulsion en présence de laurylsulfate de sodium, dont les particules ont un diamètre moyen de 0,30 µm,
- 100 g de persulfate d'ammonium.

On chauffe sous agitation le mélange réactionnel à 52°C sous pression autogène et maintient cette température pendant la durée de l'opération de polymérisation. Après 1 heure de polymérisation on ajoute en continu, jusqu'à l'instant où la quantité de chaleur, extraite par unité de temps du milieu réactionnel au moyen du fluide de circulation de la double enveloppe, atteint sa valeur maximale, une solution aqueuse de métabisulfite de sodium, à raison de 4 g/h et, en 8 heures, 15 kg d'une solution aqueuse à 15 % en poids de dodécylbenzènesulfonate de sodium. Après 11,5 heures de polymérisation et dégazage du chlorure de vinyle qui n'a pas réagi on obtient un latex à deux populations de particules de taille différente dont la teneur pondérale en matière sèche est de 50 %. La population de grosses particules et la population de fines particules ont des diamètres moyens respectifs de 0,85 µm et de 0,20 µm et représentent respectivement 75 % et 25 % en poids.

On transfère en partie le latex dans une cuve de stockage où sa température s'abaisse à 25°C.

Selon les exemples 1 et 13 une fraction du latex correspondant provenant de la cuve de stockage est soumise à l'opération de séchage par atomisation sans modification préalable de sa température.

Selon les exemples 2 à 11 et 14 à 23 une fraction du latex correspondant provenant de la cuve de stockage est soumise à l'opération de séchage par atomisation après mise en continu à température plus élevée.

Selon les exemples 2, 3, 14 et 15 la mise en température du latex est réalisée par injection directe de vapeur d'eau à basse pression (16 bars) dans ledit latex, durant son transfert de la cuve de stockage à l'appareil d'atomisation. L'injection de vapeur d'eau est effectuée au moyen d'un appareil constitué par un tube tronconique, dont les sections extrêmes ont un diamètre respectivement de 10 à 20 cm, dans lequel on fait passer le latex, dans le sens des sections croissantes, et le long et dans la paroi duquel sont ménagés des canaux d'amenée de vapeur d'eau.

Selon les exemples 4, 5, 16 et 17 la mise en température du latex est réalisée par passage dudit latex dans un échangeur tubulaire alimenté en eau chaude comme fluide de circulation.

Selon les exemples 6, 7, 8, 18, 19 et 20 la mise en température du latex est réalisées par chauffage dudit latex par micro-ondes, durant son transfert de la cuve de stockage à l'appareil d'atomisation. Le chauffage est effectué au moyen de cinq appareils à micro-ondes connus industriellement sous l'appellation de générateurs MMP12, commercialisés par la Société SAIREM, traversés en série par un tube en polytétrafluoroéthylène de 20 mm de diamètre, dans lequel on fait passer le latex.

Selon les exemples 9, 10, 11, 21, 22 et 23 la mise en température du latex est réalisée par chauffage par passage de courant électrique dans ledit latex durant son transfert de la cuve de stockage à l'appareil d'atomisation. Le chauffage est effectué au moyen d'un courant électrique alternatif de 50 hertz de fréquence dont la tension est appliquée entre les éléments interne et externe d'un tube cylindrique en acier inoxydable, dont la section de passage est en forme de couronne circulaire de 65 mm de diamètre intérieur et de 84 mm de diamètre extérieur, dans lequel on fait passer le latex. La tension est réglée de 110 à 220 volts en fonction du latex à traiter, de son débit et de l'élévation de température désirée.

Selon les exemples 12 et 24 une fraction du latex correspondant provenant directement de l'autoclave est soumise à l'opération de séchage par atomisation sans modification préalable de sa température.

Les tableaux 1 et 2 ci-après indiquent respectivement pour les exemples 1 à 12 et pour les exemples 13 à 24 :
- la température de mise en oeuvre du latex à soumettre à l'opération de séchage par atomisation,
- le taux de chlorure de vinyle monomère résiduel déterminé sur le polymère obtenu après broyage,
- les propriétés rhéologiques des plastisols obtenus.

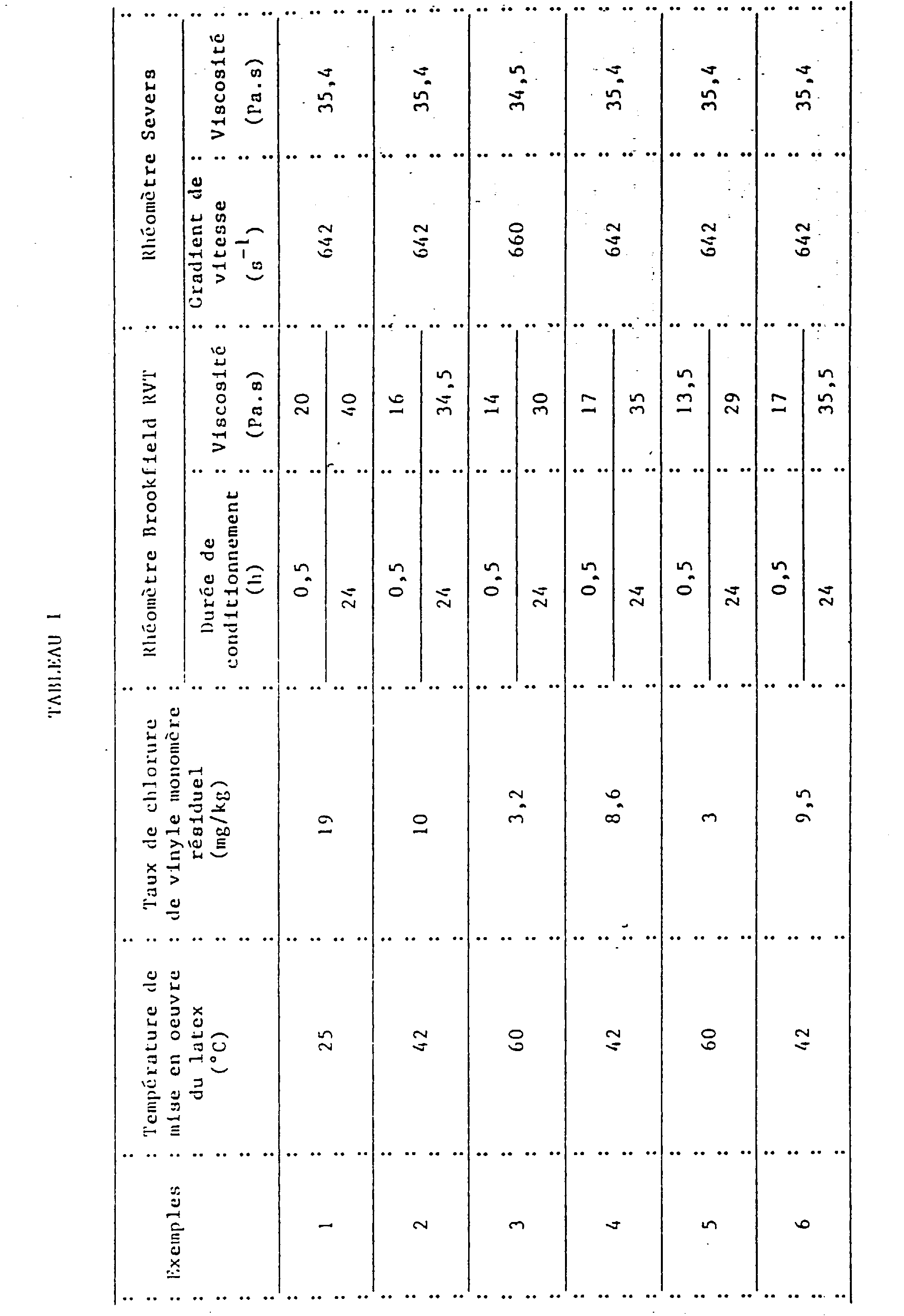

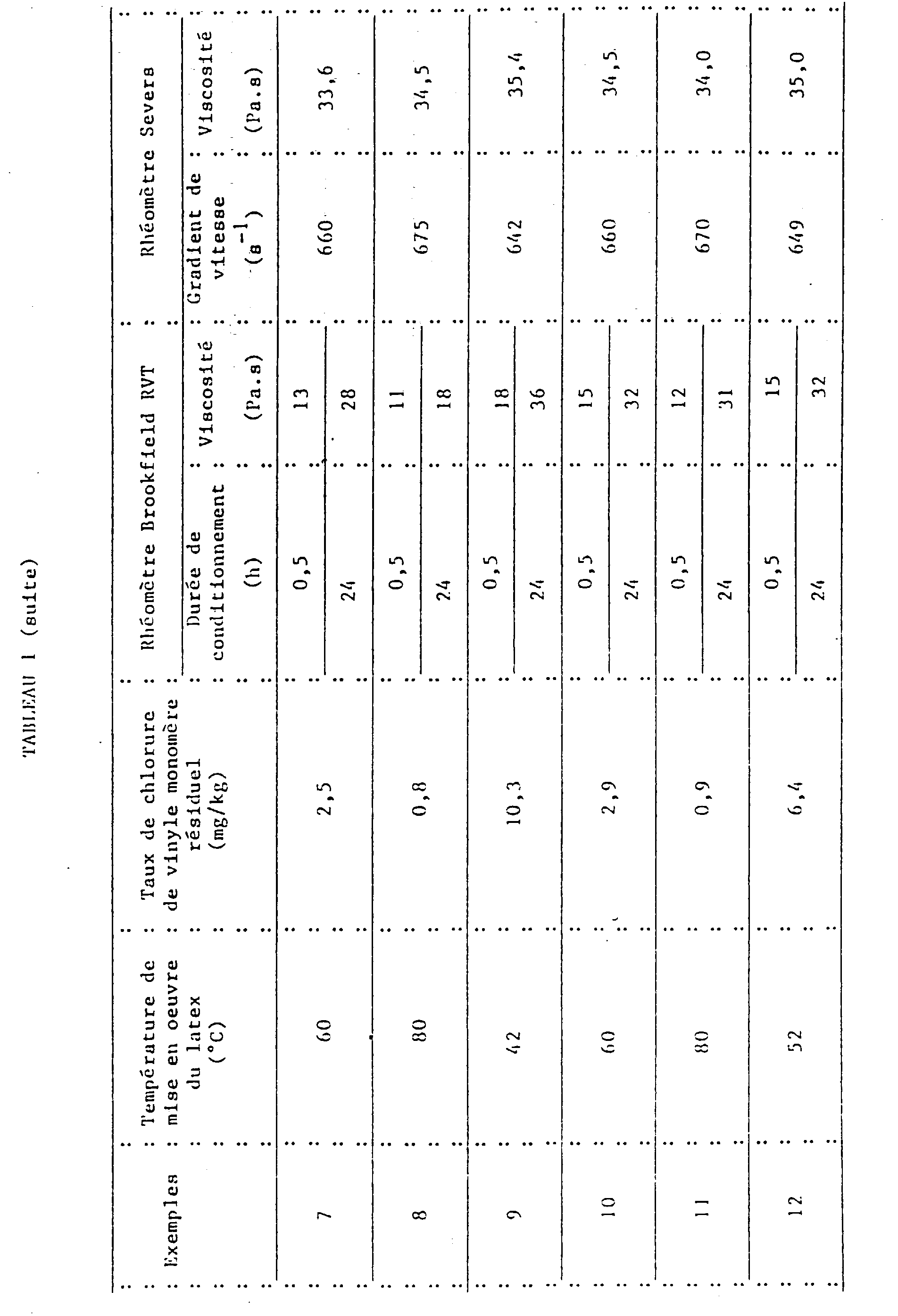

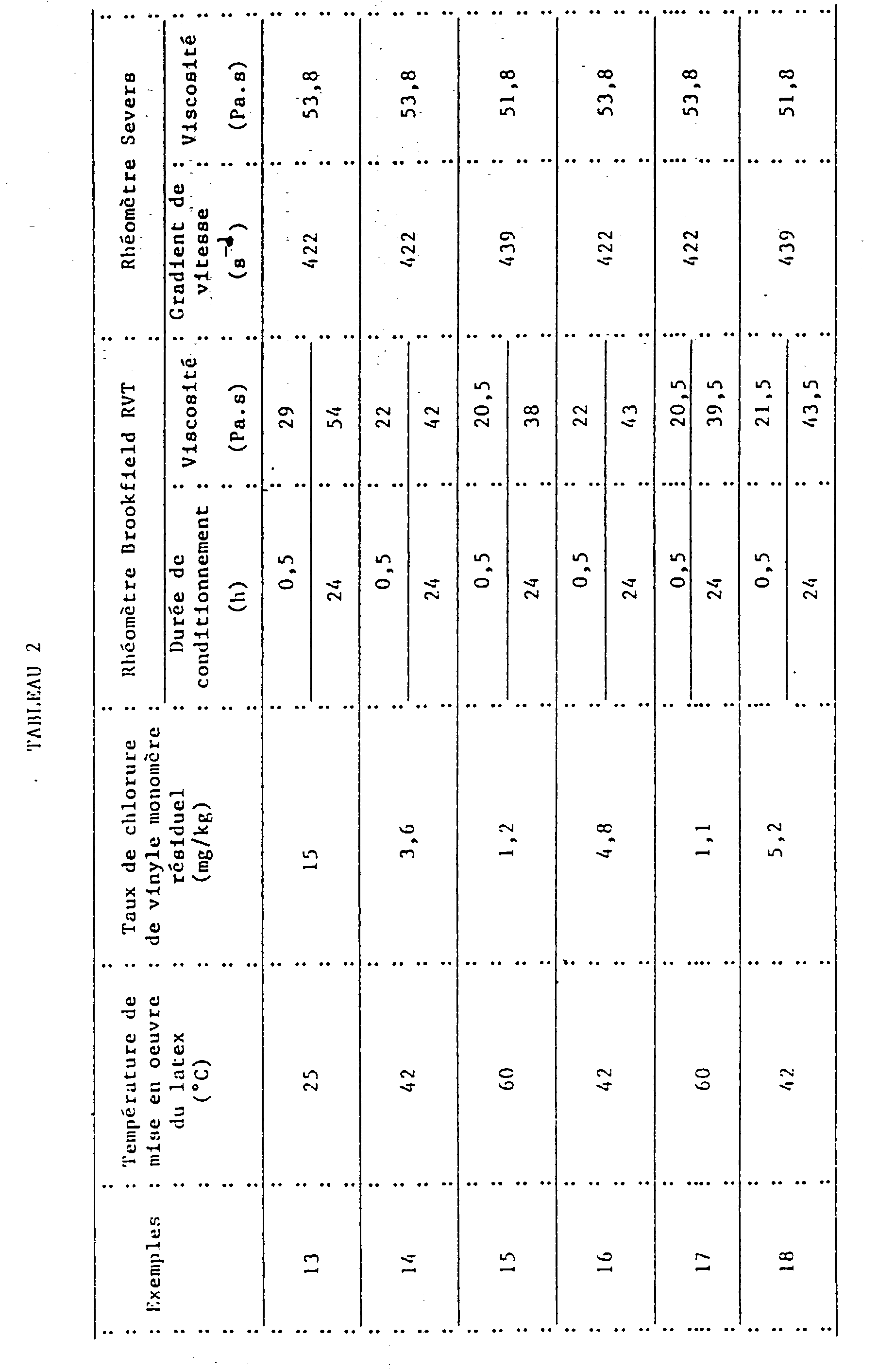

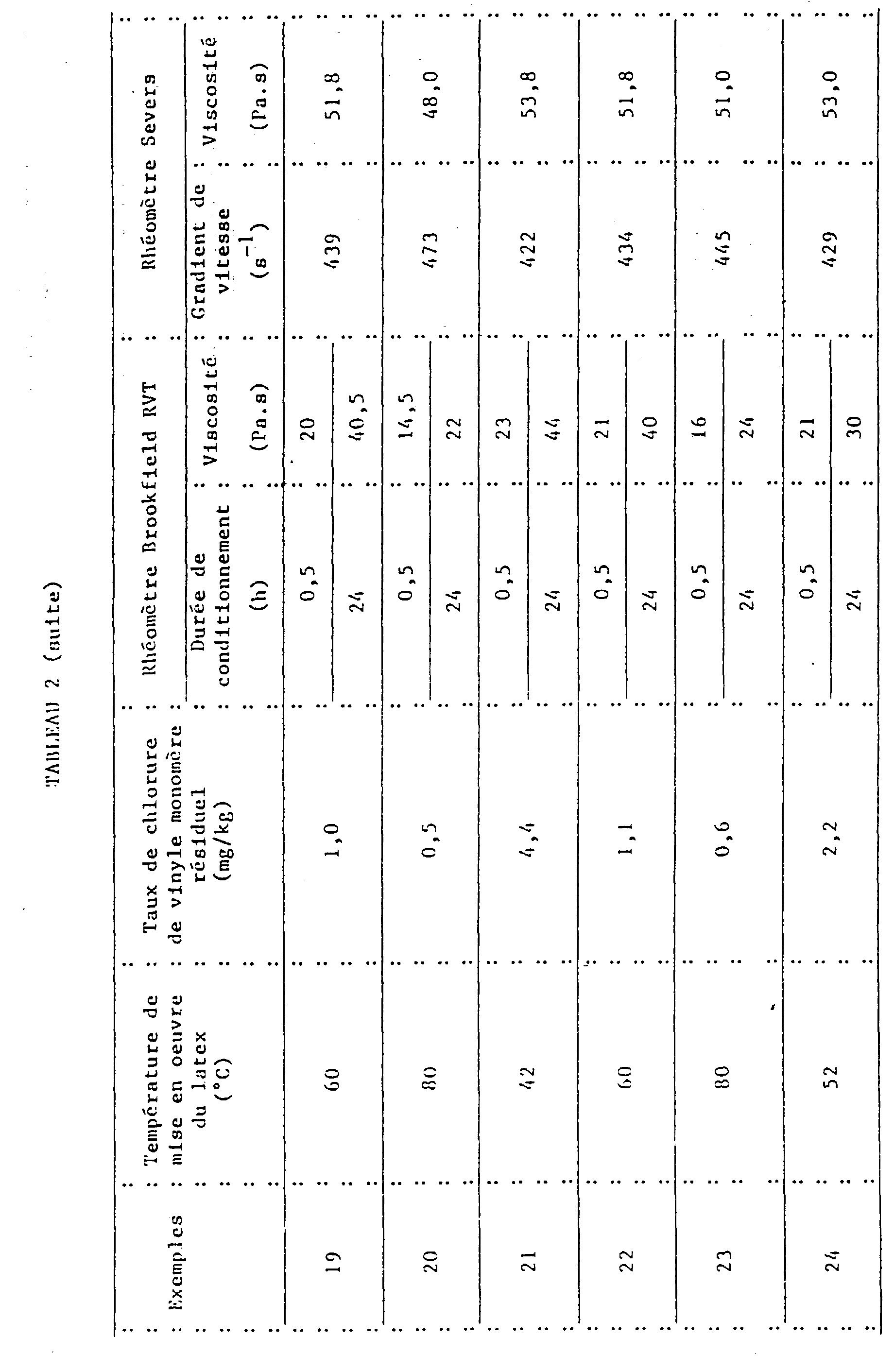

## Revendications

1. Procédé de préparation d'homo et co-polymères du chlorure de vinyle sous forme de poudre apte à donner des plastisols de propriétés rhéologiques améliorées selon lequel on réalise une opération de séchage par atomisation sur un latex d'homo- ou co-polymère du chlorure de vinyle, caractérisé par le fait que le latex à soumettre à l'opération de séchage par atomisation est porté, avant ladite opération de séchage, à une température dite température de mise en oeuvre du latex qui est au moins égale à 40° C et inférieure à la température de début de dégradation du polymère.

2. Procédé selon la revendication 1, caractérisé par le fait que la mise en température du latex est réalisée par chauffage à l'aide de vapeur d'eau à basse pression mise en contact direct avec le latex.

3. Procédé selon la revendication 1, caractérisé par le fait que la mise en température du latex est réalisée par chauffage, par l'intermédiaire d'un échangeur de chaleur, à l'aide d'un fluide de circulation.

4. Procédé selon la revendication 1, caractérisé par le fait que la mise en température du latex est réalisée par chauffage par micro-ondes.

5. Procédé selon la revendication 1, caractérisé par le fait que la mise en température du latex est réalisée par chauffage par passage de courant électrique, de préférence alternatif, dans le latex.

6. Procédé selon la revendication 1, caractérisé par le fait que, le latex à traiter étant issu de polymérisation à temperature au moins égale à 40°C, l'opération de séchage par atomisation est réalisée directement sur ledit latex, avant que sa température s'abaisse au-dessous de 40°C.

7. Homo- et copolymères du chlorure de vinyle se présentant sous forme de poudre apte à la préparation de plastisols caractérisés par le fait qu'ils sont préparés par le procédé selon l'une quelconque des revendications 1 à 6.

## Patentansprüche

1. Verfahren zur Herstellung von Homopolymeren und Copolymeren des Vinylchlorids in Form von Pulvern, aus denen sich Plastisole mit verbesserten rheologischen Eigenschaften herstellen lassen,
bei dem ein Latex eines Homo- und Copolymers des Vinylchlorids einer Sprühtrocknung unterzogen wird,
dadurch gekennzeichnet, daß der der Sprühtrocknung zu unterziehende Latex vor der Sprühtrocknung auf eine als Einsatztemperatur bezeichnete Temperatur gebracht wird, die mindestens 40 °C beträgt und niedriger ist als die Temperatur des Beginns des Polymerabbaus.

2. Verfahren nach Anspruch 1, dadurch gekennzeichnet, daß die Temperierung des Latex durch Erwärmen mit Niederdruck-Wasserdampf vorgenommen wird, der direkt mit dem Latex in Kontakt gebracht wird.

3. Verfahren nach Anspruch 1, dadurch gekennzeichnet, daß die Temperierung des Latex mit einem zirkulierenden Fluid über einen Wärmeaustauscher vorgenommen wird.

4. Verfahren nach Anspruch 1, dadurch gekennzeichnet, daß die Temperierung des Latex durch Erwärmen mit Mikrowellen vorgenommen wird.

5. Verfahren nach Anspruch 1, dadurch gekennzeichnet, daß die Temperierung des Latex durch Erwärmen durch Hindurchleiten von elektrischem Strom, vorzugsweise eines Wechselstroms, durch den Latex vorgenommen wird.

6. Verfahren nach Anspruch 1, dadurch gekennzeichnet, daß der mit einer Temperatur von mindestens 40 °C von der Polymerisation kommende zu behandelnde Latex direkt der Sprühtrocknung unterzogen wird, bevor seine Temperatur unter 40 °C absinkt.

7. Homopolymere und Copolymere des Vinylchlorids, die in Form von Pulvern vorliegen, aus denen sich Plastisole herstellen lassen, dadurch gekennzeichnet, daß sie nach dem Verfahren nach einem der Ansprüche 1 bis 6 hergestellt sind.

## Claims

1. Process for the preparation of homopolymers and copolymers of vinyl chloride in the form of powder capable of yielding plastisols with improved rheological properties, in which process a spray-drying operation is carried out on a latex of a homopolymer or copolymer of vinyl chloride, characterized in that the latex to be subjected to the spray-drying operation is brought, before the said drying operation, to a temperature called the latex processing temperature which is at least equal to 40°C and less than the degradation onset temperature of the polymer.

2. Process according to Claim 1, characterized in that the latex is brought to temperature by heating using low-pressure steam brought into direct contact with the latex.

3. Process according to Claim 1, characterized in that the latex is brought to temperature by heating by means of a heat exchanger, using a circulating fluid.

4. Process according to Claim 1, characterized in that the latex is brought to temperature by microwave heating.

5. Process according to Claim 1, characterized in that the latex is brought to temperature by heating caused by passing an electric current, preferably an alternating current, through the latex.

6. Process according to Claim 1, characterized in that, the latex to be treated arising from polymerization at a temperature at least equal to 40°C, the spray-drying operation is carried out directly on the said latex before its temperature falls below 40°C.

7. Homopolymers and copolymers of vinyl chloride which are in the form of powder suitable for the preparation of plastisols, characterized in that they are prepared by the process according to any one of Claims 1 to 6.
